# EUROPÄISCHE PATENTSCHRIFT

(11) **EP 4 314 602 B1**
(45) Veröffentlichungstag und Bekanntmachung des Hinweises auf die Patenterteilung: **25.06.2025**
(21) Anmeldenummer: 22717755.7
(22) Anmeldetag: 22.03.2022
(51) Int. Cl.: F16K 1/12, F16K 31/50, F16K 31/53

(54) **REGELVENTIL ZUR REGELUNG EINES GASDURCHFLUSSES**
CONTROL VALVE FOR CONTROLLING A GAS THROUGH-FLOW
SOUPAPE DE RÉGULATION DESTINÉE À LA RÉGULATION D'UN DÉBIT DE GAZ

(30) Priorität: 23.03.2021 DE 102021107198
(43) Veröffentlichungstag der Anmeldung: 07.02.2024
(73) Patentinhaber: Binder GmbH, 89081 Ulm (DE)
(72) Erfinder: BINDER, Robert, 89150 Laichingen (DE)
(74) Vertreter: Witte, Weller & Partner Patentanwälte mbB
(86) Internationale Anmeldenummer: PCT/EP2022/057515
(87) Internationale Veröffentlichungsnummer: WO 2022/200365

(56) Entgegenhaltungen:
- FR-A- 1 231 509
- FR-A1- 2 871 212
- US-A1- 2009 272 929
- US-A1- 2018 161 784

## Beschreibung

Die vorliegende Erfindung betrifft ein Regelventil zur Regelung eines Gasdurchflusses.

Ein Regelventil zur Regelung eines Gasdurchflusses ist beispielsweise aus DE 102013110518A1 bekannt. Bei diesem Regelventil handelt es sich um eine Regulierschieber-Vorrichtung mit einem Gehäuse, das einen von einem gasförmigen oder flüssigen Medium durchströmbaren Kanal bildet und zumindest einen Einlauf-Längsabschnitt und einen Auslauf-Längsabschnitt aufweist, einem verstellbaren Regelelement, um den Strömungsquerschnitt des Kanals zu verändern und die Durchflussmenge einzustellen. Die Regulierschieber-Vorrichtung weist ferner ein im Kanal vorgesehenes Sitzringelement auf. Das Regelelement weist einen ersten Längsabschnitt auf, der einen kreisförmigen Querschnitt mit in Längsrichtung variierenden Durchmessern besitzt. Das Regelelement ist in Längsrichtung des Kanals entlang eines Verstellwegs verstellbar, wobei das Regelelement in einer Verschluss-Position auf dem Sitzringelement aufliegt und den Kanal verschließt und in einer geöffneten Position mit dem Sitzringelement einen durchströmbaren Ringspalt bildet, und die variierenden Durchmesser entlang des ersten Längsabschnitts des Regelelements so ausgelegt sind, dass sich die Änderung der durchströmbaren Querschnittsfläche des Ringspalts zu der Verstellung des Regelelements in Längsrichtung so verhält, dass sich der Volumenstrom durch den Ringspalt nahezu linear zu der Verstellung des Regelelements entlang des Verstellwegs verhält.

Weitere Ventile sind bpsw. in FR 2 871 212 A1, US 2018/161784 A1, FR 1 231 509 A, US 2009/272929 A1 gezeigt.

Dieses bekannte Regelventil hat sich in der Praxis als sehr vorteilhaft herausgestellt. Insbesondere lassen sich Druckverluste in der Regelstrecke deutlich reduzieren, sodass sich dadurch Energiekosten einsparen lassen.

Dennoch wurde festgestellt, dass sich dieses bekannte Regelventil für kleinere Rohrdurchmesser, insbesondere DN 50 bis DN 200, nicht optimal betreiben lässt.

Vor diesem Hintergrund besteht die Aufgabe der vorliegenden Erfindung darin, ein Regelventil zu schaffen, dass einerseits Druckverluste in der Regelstrecke deutlich reduziert und andererseits auch für kleinere Baugrößen DN 50 bis DN 200 optimal im Hinblick auf die Regelgenauigkeit einsetzbar ist. Darüber hinaus besteht auch der Wunsch, innerhalb des Regelventils einen Messbereich zu schaffen, der eine sehr genaue Durchflussmessung ermöglicht.

Diese Aufgabe wird von einem Regelventil mit den Merkmalen des Anspruchs 1 gelöst. Das erfindungsgemäße Regelventil weist ein längliches, einen Strömungskanal begrenzendes Gehäuse auf, dass sich in einen Einströmabschnitt, einen Antriebsabschnitt und einen Ausströmabschnitt gliedert, die entlang einer Längsachse angeordnet sind, wobei das Gas den Strömungskanal vom Einströmabschnitt über den Antriebsabschnitt zum Ausströmabschnitt durchströmt. Innerhalb des Antriebsabschnitts ist eine Getriebeeinrichtung vorgesehen, die eine von außen antreibbare parallel zur Längsachse liegende Abtriebswelle und ein Rundschieberelement aufweist, das entlang der Längsachse über die Abtriebswelle verschiebbar angeordnet ist und eine äußere Ventilsitzfläche aufweist, die einen zwischen sich und einer Innenfläche des Ausströmabschnitts definierten Ringspalt durch eine Längsverschiebung in Strömungsrichtung schließt. Des Weiteren ist ein Strömungselement vorgesehen, dass an der Getriebeeinrichtung an dessen dem Einströmabschnitt zugewandten Ende vorgesehen ist und eine kalottenförmige Außenfläche aufweist, die das vom Einströmabschnitt kommende Gas in einen Ringspalt zwischen Getriebeeinrichtung und Innenfläche des Antriebsabschnitts lenkt. Das Rundschieberelement ist kegelförmig ausgebildet mit einer kreisförmigen Grundfläche und einer Mantelfläche, die zwischen der Ventilsitzfläche und der Spitze des Rundschieberelements eine Ventilfläche definiert, wobei an der Spitze des Rundschieberelements ein parallel zur Längsachse verlaufendes Sackloch vorgesehen ist. Der Einströmabschnitt weist einen zylindrischen Strömungskanal auf, der im Wesentlichen über die gesamte Längserstreckung einen konstanten Durchmesser aufweist und sich beim Übergang zum Antriebsabschnitt konisch aufweitet. Bevorzugt weist der Antriebsabschnitt einen Strömungskanal auf, dessen Durchmesser sich in Strömungsrichtung gesehen zunächst konisch aufweitet und anschließend im Wesentlichen konstant bleibt. Im Einströmabschnitt ist zumindest eine Öffnung für das Einführen von zumindest einem Messelement, vorzugsweise einem Durchflussmesselements, vorgesehen.

Das erfindungsgemäße Regelventil ist so konzipiert, dass das einströmende gasförmige Medium zunächst über das Strömungselement nach außen in einen kreisringförmigen bzw. ringspaltförmigen Strömungskanal-Abschnitt geleitet wird. Dadurch ergibt sich stromaufwärts des Strömungselements ein strömungsberuhigter Bereich, der für eine Messung, beispielsweise eine Durchflussmessung, optimal ist.

Das gasförmige Medium fließt durch den Strömungskanal-Abschnitt weiter stromabwärts an der äußeren Ventilsitzfläche vorbei und entlang des Rundschieberelements in den Ausströmabschnitt. Da das Medium nur in einem kreisringförmigen Strömungskanal fließt, entstehen kaum Strömungswirbel, sodass die Druckverluste im Regelbereich des Regelventils gering sind. Darüber hinaus ist das Rundschieberelement so angeordnet, dass es in Strömungsrichtung schließt, sodass es beim Schließen nicht gegen den Strömungsdruck arbeiten muss. Das ermöglicht aufgrund der geringeren aufzubringenden Drehmomente einen deutlich kleineren Antrieb, ohne jedoch Einbußen in der Regelgenauigkeit hinnehmen zu müssen.

Die Aufgabe der Erfindung wird damit vollkommen gelöst.

Bei einer bevorzugten Weiterbildung weist die Getriebeeinrichtung eine Antriebswelle auf, die sich senkrecht zur Abtriebswelle erstreckt und mit dieser über ein Getriebe verbunden ist, wobei ein Ende der Abtriebswelle außerhalb des Gehäuses liegt und mit einer Antriebseinrichtung koppelbar ist. Bevorzugt ist das Getriebe als Umlenkgetriebe, vorzugsweise als Kegelradgetriebe ausgebildet.

Diese Maßnahmen haben den Vorteil, dass eine klein bauend Getriebeeinrichtung möglich ist, die ein hochpräzises Regelverhalten zulässt. Über das Getriebe können auch sehr kleine Verstellwege des Rundschieberelements reproduzierbar realisiert werden.

Bevorzugt ist im Ausströmabschnitt konzentrisch zur Längsachse ein Ringelement vorgesehen, das zumindest zwei sich radial erstreckende Speichen aufweist, die einen sich parallel zur Längsachse erstreckenden Stift halten, wobei der Stift in das Sackloch eingreift, um das Rundschieberelement abzustützen und zu führen.

Diese Maßnahmen haben sich als besonders vorteilhaft herausgestellt. Insbesondere lässt sich eine Verbesserung der Führung des Rundschieberelements über den Stift erzielen, sodass die Regelgenauigkeit erhöht und reproduzierbarer ist. Durch die kegelförmige Ausgestaltung des Rundschieberelements lässt sich ein sehr guter Strömungsverlauf mit geringer Wirbelbildung erreichen.

Bei einer bevorzugten Weiterbildung ist eine Mantellinie der Mantelfläche des Rundschieberelements eine nicht-gerade Kurve und weist die Innenfläche des Ausströmabschnitts eine Regelkontur auf, wobei die Regelkontur und die Ventilsitzfläche derart aufeinander abgestimmt sind, dass sich die Veränderung des durchströmten Querschnitts des Ringspalts zwischen der Innenfläche und der Ventilsitzfläche so zu einem Verstellweg des Rundschieberelements in Längsrichtung abgestimmt ist, dass eine im wesentlichen lineare Betriebskennlinie erzielt wird.

Um im Betrieb eine lineare Betriebskennlinie zu erreichen, benötigt man eine nicht- lineare Regelventil-Kennlinie. Der Erfinder hat erkannt, dass sich bei größer werdendem Durchfluß der dynamische Druckverlust erhöht und deshalb das Regelventil zur Mengenkonstanz überproportional den Querschnitt öffnen muss.

Weiter bevorzugt weist die Regelkontur zumindest einen Regelkontur-Endbereich auf, der so ausgebildet ist, dass er im geschlossenen Zustand des Regelventils die Ventilsitzfläche des Rundschieberelements in Strömungsrichtung zumindest teilweise abstützt und mit dieser dichtend zusammenwirkt. Weiter bevorzugt weist die Regelkontur einen nicht-geradlinigen Verlauf auf.

Diese Maßnahmen erreichen eine weitere Optimierung des Regelverhaltens des Regelventils.

Bei einer bevorzugten Weiterbildung ist die Abtriebswelle als Spindel, vorzugsweise als Trapezgewindespindel ausgebildet und wirkt mit einer Spindelmutter zusammen, wobei die Spindelmutter mit dem Rundschieberelement gekoppelt ist.

Diese Ausgestaltung hat sich als besonders vorteilhaft herausgestellt, weil sie eine reproduzierbare Verstellung des Rundschieberelements mit sehr geringen Toleranzen ermöglicht.

Bei einer bevorzugten Weiterbildung weisen der Einströmabschnitt, der Antriebsabschnitt und der Ausströmabschnitt an ihren Längsenden jeweils einen Flansch auf, wobei die Abschnitte über die Flansche miteinander lösbar verbunden sind.

Diese Maßnahme hat den Vorteil, dass über die Dreiteilung des Regelventils eine hohe Flexibilität bezüglich der Einbausituationen erreicht wird. D. h. mit anderen Worten, dass das Regelventil einfach an unterschiedliche Gegebenheiten angepasst werden kann, indem beispielsweise unterschiedlich lange Einström- oder Ausströmabschnitte verwendet werden. Darüber hinaus lassen sich dadurch natürlich auch die Herstellungs- und Montagekosten senken.

Bevorzugt weist der Strömungskanal im Antriebsabschnitt zumindest abschnittsweise zwei voneinander getrennte kreisringsegmentförmige Kanäle auf. Weiter bevorzugt weist der Ausströmabschnitt in einem stromaufwärtigen Bereich einen kreisringförmigen Strömungskanal auf, dessen Durchmesser in Strömungsrichtung zunächst dem Durchmesser des angrenzenden Antriebsabschnitts entspricht und sich anschließend konisch verjüngt auf einen Durchmesser, der im Wesentlichen dem Durchmesser des Einströmabschnitts entspricht, wobei der kreisringförmige Strömungskanal in einen kreisförmigen Strömungskanal übergeht.

Diese Ausgestaltungen der verschiedenen Abschnitte des Strömungskanals haben sich als besonders vorteilhaft herausgestellt, um einerseits einen strömungsberuhigten Messbereich im Einströmabschnitt zu erzielen und andererseits eine wirbelarme und reproduzierbare Strömung mit geringen Druckverlusten über die gesamte Regelventil-Länge zu erreichen.

Weiter bevorzugt ist im Einströmabschnitt ein Strömungsgleichrichterelement, vorzugsweise eine Lochscheibe, am stromaufwärtigen Ende vorgesehen.

Diese Maßnahme hat den Vorteil, dass auf einfache Art und Weise ein Messelement in das Regelventil eingebracht werden kann. Ferner lässt sich durch das Strömungsgleichrichterelement die Strömung weiter optimieren, um besonders gute Messergebnisse zu erreichen.

Die Antriebseinrichtung ist bevorzugt als pneumatische Antriebseinrichtung, hydraulische Antriebseinrichtung oder als elektrische Antriebseinrichtung ausgebildet.

Bei einer bevorzugten Weiterbildung ist das Regelventil so dimensioniert, dass es in eine Rohrleitung mit einer Nennweite zwischen DN 50 bis DN 200 einsetzbar ist.

Bei diesen kleineren Rohrdurchmessern lässt sich das erfindungsgemäße Regelventil besonders gut einsetzen.

Das erfindungsgemäße Regelventil lässt sich besonders vorteilhaft als Regelventil in einer Flotationsanlage zur Regelung des Gaszuflusses, d.g. der Gasmenge, in mehrere Tanks der Flotationsanlage verwenden. Gerade bei dieser Verwendung können gegenüber bisherigen Lösungen sehr hohe Energieeinsparungseffekte erzielt werden. Werden Flotationsanlagen statt mit den bisherigen Regelventilen mit den erfindungsgemäßen Regelventil ausgestattet, kann ein deutlich ökonomischerer Betrieb erreicht werden. Zudem wird durch die hohe Regelpräzision der Flotations-Prozess deutlich verbessert und die Anlagenleistung gesteigert.

Die Problematik bei Flotationsanlagen im Hinblick auf die Regelung der Luftmenge besteht darin, dass zum einen mehrere Tanks über einen gemeinsamen Verdichter mit Luft versorgt werden (über ein gemeinsames Rohrleitungssystem) und zum anderen die Verhältnisse in den Tanks unterschiedlich sind und sich zudem dynamisch verändern können. Beispielsweise sind die Flüssigkeitsstände in den Tanks unterschiedlich, so dass die Luft gegen unterschiedliche statische Drücke eingebracht werden muss (bei KonstantHaltung der Luftmenge). Auch die Dichte der Flüssigkeiten in den Tanks kann sich verändern, so dass sich auch hier die statischen Drücke verändern. Ohne Regelventile in den Leitungen zu den Tanks, die auf solche Druckänderungen schnell und präzise reagieren können, um die Luftmenge in die Tanks trotz sich veränderndem Druck konstant zu halten, würde sich die in einen Tank eingebrachte Luftmenge ständig ändern. Es ist klar, dass dadurch der Flotations-Prozess selbst beeinträchtigt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung. Dabei zeigen:
- Figur 1: eine Seitenansicht des erfindungsgemäßen Regelventils mit einer Antriebseinrichtung;
- Figur 2: eine Seiten-Schnittansicht des Regelventils im geöffneten Zustand;
- Figur 3: eine Seiten-Schnittansicht des Regelventils im geschlossenen Zustand, wobei die Ansicht um 90° gegenüber der Ansicht von Figur 2 gedreht dargestellt ist;
- Figur 4: eine Schnittansicht entlang der Linie A-A aus Figur 2;
- Figur 5: eine Schnittansicht entlang der Linie B-B und eine Schnittansicht entlang der Linie C-C der Figur 2; und
- Figur 6: eine perspektivische Darstellung des erfindungsgemäßen Regelventils, wobei der Ausströmabschnitt versetzt dargestellt ist.

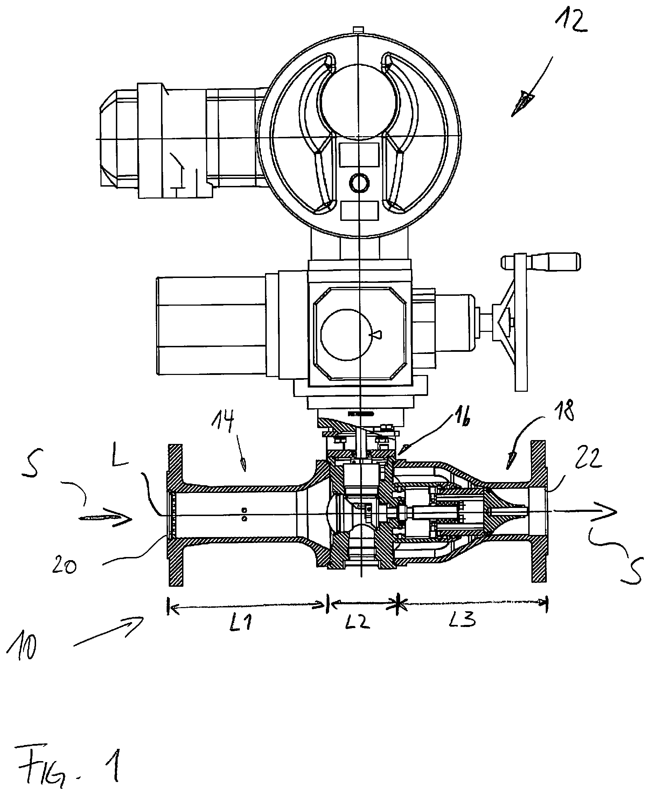

In Figur 1 ist ein erfindungsgemäßes Regelventil in einer Schnittansicht dargestellt und mit dem Bezugszeichen 10 gekennzeichnet. Das Regelventil dient insbesondere dazu, die Durchflussmenge eines gasförmigen Mediums, vorzugsweise Luft, beispielsweise in einer Flotationsanlage zu regeln. Das Regelventil 10 ist so ausgelegt, dass es sich nachträglich in bestehende Rohrleitungssysteme einbauen lässt.

Das Regelventil 10 ist mit einer Antriebseinrichtung 12 lösbar gekoppelt, die für ein gesteuertes Öffnen und Schließen des Regelventils 10 dient. Die Antriebseinrichtung 12 kann je nach Anwendungsfall einen elektrischen Antrieb, einen pneumatischen Antrieb oder einen hydraulischen Antrieb aufweisen. Da es sich bei der Antriebseinrichtung 12 um eine bekannte Komponente handelt, soll darauf nicht weiter eingegangen werden. Wichtig ist jedoch, dass die Antriebseinrichtung 12 lösbar an dem Regelventil angebracht ist, sodass jederzeit ein Austausch möglich ist.

Das Regelventil 10 gliedert sich in drei Abschnitte, nämlich einen Einströmabschnitt 14 mit einer Länge L1, einen Antriebsabschnitt 16 mit einer Länge L2 und einen Ausströmabschnitt 18 mit einer Länge L3. Die drei Abschnitte 14,16 und 18 bilden eigenständige Baugruppen, die miteinander lösbar verbunden sind und damit auch jederzeit austauschbar sind. Beispielsweise wäre denkbar, den Einströmabschnitt 14 je nach Anwendungsfall unterschiedlich lang auszubilden.

Wie sich aus Figur 1 ergibt, sind die drei Abschnitte 14,16 und 18 entlang einer Längsachse L angeordnet, sodass sich ein quasi geradliniger Strömungsverlauf durch das Regelventil 10 ergibt. D. h. mit anderen Worten, dass eine Einströmöffnung 20 des Regelventils 10 konzentrisch zu einer Ausströmöffnung 22 liegt.

Die Strömungsrichtung des gasförmigen Mediums ist in Figur 1 durch die Pfeile S dargestellt. Das gasförmige Medium fließt durch die Einströmöffnung 20 in das Regelventil 10 und verlässt es durch die Ausströmöffnung 22. An dieser Stelle sei angemerkt, dass das Regelventil 10 nur so vorteilhaft eingesetzt werden kann. Oder mit anderen Worten ausgedrückt, würde das gasförmige Medium in entgegengesetzter Richtung durch das Regelventil 10 strömen, würden die vorgenannten Vorteile nicht erreicht werden können. Die Durchströmungsrichtung des Regelventils 10 ist folglich, anders als bei anderen Regelventilen, von großer Bedeutung.

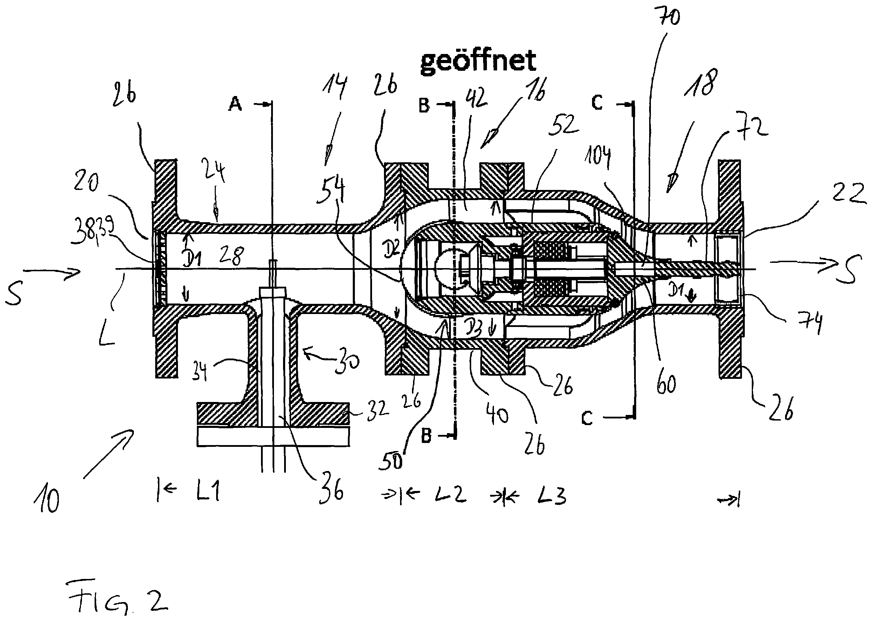

Der genaue Aufbau des Regelventils 10 soll nachfolgend anhand der Figuren 2-5 näher erläutert werden.

In Figur 2 ist das Regelventil 10 von Figur 1 vergrößert dargestellt, wobei die Schnittebene jedoch um 90° gedreht wurde.

Der Einströmabschnitt 14 weist ein rohrförmiges Gehäuse 24 auf, das an beiden Enden einen Flansch 26 besitzt. Das rohrförmige Gehäuse 24 bildet einen zylindrischen Strömungskanal 28 mit einem Innendurchmesser D1 im Bereich der Einströmöffnung 20. Der Innendurchmesser des Strömungskanals 28 bleibt über nahezu die gesamte Länge L1 konstant, erweitert sich dann aber -in Strömungsrichtung gesehen- zu einem Innendurchmesser D2. Die Länge L1 beträgt bevorzugt ca. 200mm.

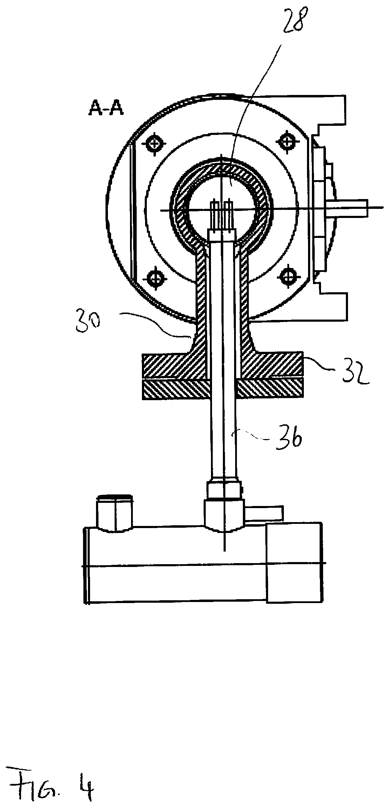

Wie aus Figur 2 zu erkennen ist, weist das Gehäuse 24 einen rohrförmigen (mit kreisförmigem oder ovalem Querschnitt) Abzweig 30 auf, der sich etwa in der Hälfte der Länge des Einströmabschnitts 14 rechtwinklig zur Längsachse L nach außen erstreckt. Der Abzweig 30 endet mit einem Flansch 32. Der Abzweig 30 bildet somit einen Kanal 34, der eine Verbindung von außen in den Strömungskanal 28 schafft. Über diesen Kanal 34 lässt sich somit ein Messinstrument, insbesondere ein Durchflussmessinstrument 36 in den Strömungskanal 28 einbringen. In Figur 4 ist der Abzweig 30 nochmals deutlicher dargestellt. Insbesondere ist hier zu erkennen, dass das Messinstrument zwei Sensorspitzen aufweist, die im Zentrum des Strömungskanals positioniert sind. Es hat sich als besonders vorteilhaft herausgestellt, die Sensorspitzen in Längsrichtung gesehen ca. 100mm beabstandet von dem stromabwärtigen Ende des Einströmabschnitts anzuordnen.

Durch die besondere Ausgestaltung des Regelventils 10 lässt sich im Strömungskanal 28 eine sehr homogene Strömung erreichen, sodass die Messung gerade in diesem Bereich sehr vorteilhaft ist. Die Messergebnisse sind sehr genaue und reproduzierbar.

Je nach Anwendungsfall kann, auch zur Verbesserung der Messung, im Bereich der Einströmöffnung 20 ein Strömungsgleichrichter-Element 38 vorgesehen werden. Bevorzugt wird hierfür eine Lochscheibe 39 verwendet. Das Strömungsgleichrichter-Element 38 kann auch zum gezielten Druckabbau bei verbundenen Regelkreisen mit unterschiedlichen Drücken bei einer gemeinsamen Gas-Versorgung eingesetzt werden. Auf diese Weise lassen sich bspw. der Geräuschpegel und der Regelventil-Verschleiß reduzieren und die Regelgüte erhöhen.

An den Einströmabschnitt 14 schließt sich der Antriebsabschnitt 16 an, der ebenfalls über ein rohrförmiges Gehäuse 40, das ebenfalls durch zwei Flansche 26 in Längsrichtung begrenzt ist. Einströmabschnitt 14 und Antriebsabschnitt 16 sind über die angrenzenden Flansche 26 lösbar und gasdicht miteinander verbunden. Die Einströmöffnung des Antriebsabschnitts 16 ist gleich groß wie die Ausströmöffnung des Einströmabschnitts 14, weist folglich einen Innendurchmesser D2 auf.

Das Gehäuse 40 bildet einen Strömungskanal 42, der sich -in Strömungsrichtung gesehen- von dem Innendurchmesser D2 auf einen größeren Innendurchmesser D3 aufweitet. Wie sich aus Figur 2 ergibt, besitzt die größere Länge des Antriebsabschnitts 16 den Innendurchmesser D3. Insbesondere besitzt die Ausströmöffnung des Antriebsabschnitts 16 den Innendurchmesser D3.

In dem Gehäuse 40 und von diesem gehalten liegt eine Getriebeeinrichtung 50, die alle zur Regelung des Gasdurchflusses notwendigen Komponenten aufweist. Diese Komponenten, auf die nachfolgend detailliert eingegangen wird, sind von einem strömungsoptimierten Gehäuse 52 bzw. einer Gehäuseverkleidung umgeben, das bevorzugt zentrisch zur Längsachse L im Strömungskanal 42 angeordnet ist. An dieser Stelle sei noch angemerkt, dass das Gehäuse 52 fest mit dem Gehäuse 40 des Antriebsabschnitts 16 verbunden ist, sich jedoch aus dem Antriebsabschnitt 16 in den angrenzenden Ausströmabschnitt 18 erstreckt. Das bedeutet mit anderen Worten, dass die beiden Abschnitte 16,18 voneinander lösbar bleiben, obgleich ein Teil des Gehäuses 52 im Ausströmabschnitt 18 liegt.

Wie bereits erwähnt ist das Gehäuse 52 strömungsoptimiert ausgebildet, sodass das gasförmige Medium möglichst widerstandsfrei durch den Strömungskanal 42 strömen kann. Das Gehäuse 52 besitzt hierfür an seinem stromaufwärtigen Ende, dass dem Einströmabschnitt 14 zugewandt ist, ein kalottenförmige ausgebildetes Strömungselement 54. Das Strömungselement 54 hat die Aufgabe, das einströmende Gas nach außen in den Strömungskanal 42 zu lenken. An dieser Stelle sei angemerkt, dass der Strömungskanal 42 am stromaufwärtigen Ende des Antriebsabschnitts 16 kreisringförmig ausgebildet ist. D. h. mit anderen Worten, dass das Zentrum des Strömungskanals 42 durch das Gehäuse 52 besetzt ist.

Das Strömungselement 54 mit seiner konvexen Form hat entscheidenden Einfluss auf die Strömung im Einströmabschnitt 14 und damit auch auf die dort erzielbaren Messergebnisse. Das Strömungselement 54 wirkt als integrierter Strömungsgleichrichter und stabilisiert damit das Strömungsprofil im Einströmabschnitt 14,

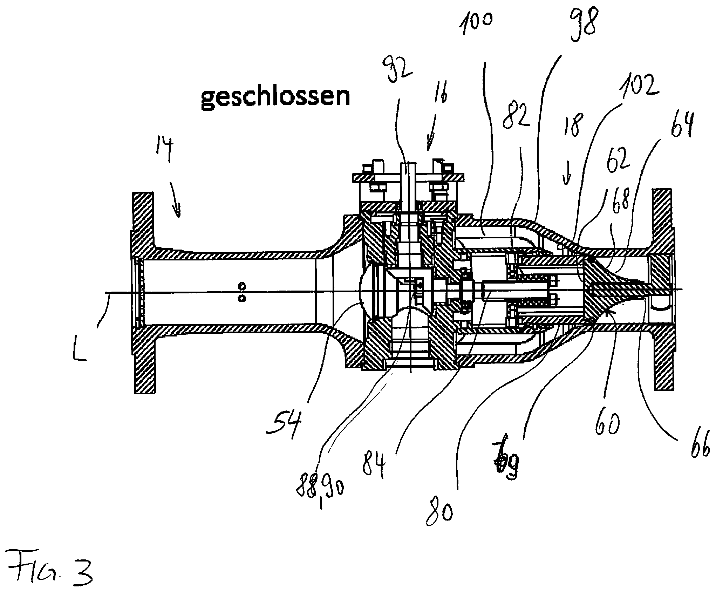

Am stromabwärtigen, der Austrittsöffnung 22 zugewandten Ende des Gehäuses 52 ist ein Regelelement vorgesehen, dass als Rundschieberelement 60 ausgebildet ist. In Figur 2 ist dieses Rundschieberelement 60 in einer vollständig geöffneten Position gezeigt und in Figur 3 in einer vollständig geschlossenen Position. Das Rundschieberelement 60 ist in Längsrichtung verschiebbar im Gehäuse 52 angeordnet, sodass durch Verschieben des Rundschieberelements 60 die durchströmte Querschnittsfläche des Strömungskanals verändert werden kann.

Das Rundschieberelement 60 weist eine Kegelstumpfform auf mit einer kreisförmigen Grundfläche 62, wie in Figur 3 gezeigt ist, und einer Mantelfläche 64, die sich von der Grundfläche 62 zu einer Spitze 66 erstreckt. Die Mantelfläche 64 besitzt eine nicht-geradlinige Mantellinie 68. Ausgehend von der Grundfläche 62 reduziert sich der Durchmesser des Rundschieberelements 60 -in Längsrichtung gesehen, zunächst stark, um anschließend zur Spitze 66 sich nur noch wenig zu verändern.

Im Bereich der Grundfläche 62 ist ein Dichtungsring 69 vorgesehen, der eine Ventilsitzfläche des Rundschieberelements 60 bildet. Wie sich aus Figur 3 ergibt, ist das Rundschieberelement 60 konzentrisch zur Längsachse L angeordnet. Der Dichtungsring 69, d.h. die Ventilsitzfläche, bildet mit der radial gegenüberliegenden Innenfläche des Ausströmabschnitts 18 jenen Strömungsquerschnitt, der zur Regelung der Durchflussmenge verändert wird.

An der Spitze 66 des Rundschieberelements 60 ist eine Bohrung 70 vorgesehen, die als Sackloch ausgebildet ist. Die Bohrung 70 erstreckt sich entlang der Längs- und Symmetrieachse des Rundschieberelements 60.

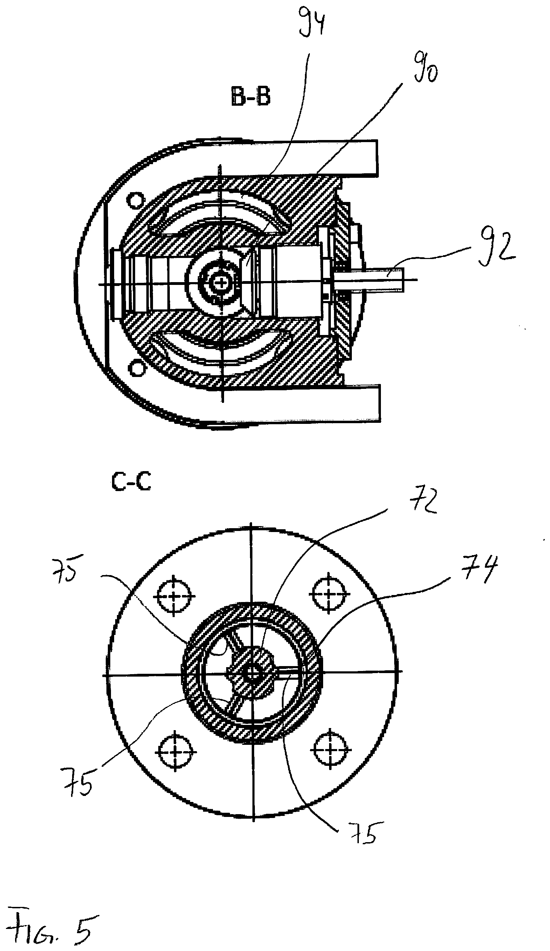

Die Bohrung 70 ist dazu ausgebildet, einen Stift 72 aufzunehmen. Der Stift 72 ist ortsfest gegenüber dem Ausströmabschnitt 18 an einem Ringelement 74 angebracht, wie bspw. in Figur 5 gezeigt, das seinerseits im Bereich der Ausströmöffnung 22 des Ausströmabschnitts 18 angeordnet ist. Das Ringelement 74 weist einen äußeren Ring mit davon abgehenden Speichen 75 auf, die den Stift 74 an einem seiner beiden Enden halten. Vorzugsweise sind mindestens drei Speichen vorgesehen. Das andere Ende des Stifts 74 ragt in die Bohrung 70 hinein, sodass das Rundschieberelement 60 im Bereich seiner Spitze 66 einerseits gehalten und andererseits geführt wird, wenn sich das Rundschieberelement 60 in Längsrichtung bewegt.

Bezugnehmend auf die Figur 3 ist im Bereich der Grundfläche 62 des Rundschieberelements 60 ein buchsenförmiges Element 80 vorgesehen. Es ist fest mit der Grundfläche 62 verbunden. Innerhalb des Elements 80 ist eine Spindelmutter 82 angebracht, die mit einer Gewindespindel 84 zusammenwirkt. Die Gewindespindel 84 ist innerhalb des Gehäuses 52 konzentrisch zur Längsachse L angeordnet und dient als Abtriebswelle.

Die Gewindespindel 84 bzw. die Abtriebswelle ist an ihrem stromaufwärtigen Ende mit einem Getriebe 88, dass bevorzugt als Kegelradgetriebe 90 ausgebildet ist, gekoppelt. Das Getriebe 88 dient dazu, die über eine Antriebswelle 92 eingebrachte Energie auf die Abtriebswelle zu übertragen. Die Antriebswelle 92 erstreckt sich senkrecht zur Längsachse L im Antriebsabschnitt 16 in das Gehäuse 54. Das Getriebe 88 setzt folglich die Drehbewegung um Achse senkrecht zur Längsachse L in eine Drehbewegung um die Längsachse L um.

Wie sich bei einem Vergleich der Figuren 2 und 3 ergibt, erstreckt sich die Antriebswelle 92 auch durch einen Teil des Strömungskanals 42, sodass dieser dadurch zumindest abschnittsweise blockiert ist. Die Schnittansicht entlang der Linie B-B aus Figur 2, die in Figur 5 gezeigt ist, verdeutlicht, dass in diesem Bereich der Strömungskanal aus zwei voneinander getrennten kreisringsegmentförmigen Öffnungen 94 besteht.

Die Antriebswelle 92 ist mit der Antriebseinrichtung 12 verbunden, insbesondere lösbar verbunden, sodass die Antriebseinrichtung 12 gewechselt werden kann ohne gleichzeitigen Austausch des Getriebes 88.

Der Ausströmabschnitt 18 weist, wie die beiden anderen Abschnitte 12,14 auch, ein rohrförmiges Gehäuse 98 auf, wie in Figur 3 gezeigt, das an seinen beiden Enden jeweils einen Flansch 26 besitzt. Das Gehäuse 98 ist über den Flansch 26 mit dem Antriebsabschnitt 16 gasdicht verbunden, wobei der Innendurchmesser der Einströmöffnung des Ausströmabschnitts 18 dem Durchmesser D3 des Antriebsabschnitts 16 entspricht.

Das Gehäuse 98 bildet einen Strömungskanal 100, der sich in Strömungsrichtung gesehen verjüngt. Der Innendurchmesser des Strömungskanals 100 reduziert sich von dem Innendurchmesser D3 auf den Innendurchmesser D1 an der Ausströmöffnung 22.

Wie bereits erwähnt, erstreckt sich das Gehäuse 52 der Getriebeeinrichtung 50 in den Strömungskanal 100 des Ausströmabschnitts 18, sodass dadurch nur ein kreisringförmiger Querschnitt für die Strömung zur Verfügung steht.

Im Bereich des Übergangs vom Innendurchmesser D3 zum Innendurchmesser D1 weist die Innenfläche des Strömungskanals 100 eine Regelkontur 102 auf, die das Regelverhalten des Regelventils mitbestimmt. Wie sich aus den Figuren 2 und 3 ergibt, wird beim Verfahren des Rundschieberelements 60 in Längsrichtung der Querschnitt zwischen dem Dichtungsring 69 und der Innenfläche des Strömungskanals verändert. In vollständig geöffnetem Zustand des Regelventils 10, wie in Figur 2 gezeigt, ist der Querschnitt bzw. die Querschnittsfläche maximal. In vollständig geschlossenen Zustand des Regelventils 10, wie in Figur 3 gezeigt, ist die Querschnittsfläche null, d. h. der Dichtungsring 69 liegt dichtend an der Innenfläche an. Dadurch, dass das Rundschieberelement in Längsrichtung verstellt wird, lässt sich ein relativ großer Hub erzielen, was eine sehr präzise Regelung erlaubt. Oder mit anderen Worten, der große Hub ermöglicht eine hohe Auflösung der Einstellung unterschiedlicher Öffnungsquerschnitte des Regelventils.

Wie zuvor bereits erwähnt, weist das Rundschieberelement 60 eine nicht-geradlinige Mantellinie 68 auf. Diese Mantellinie ist so gewählt, dass sich die Querschnittsfläche des Strömungskanals nach dem Dichtungsring 69 schnell vergrößert. Darüber hinaus lassen sich in der Regelkontur 102 Ungleichmäßigkeiten 104 vorsehen, um das Regelverhalten an spezielle Gegebenheiten anpassen zu können. Insbesondere kann durch die Wahl der Regelkontur 102 eine lineare Betriebskennlinie erreicht werden.

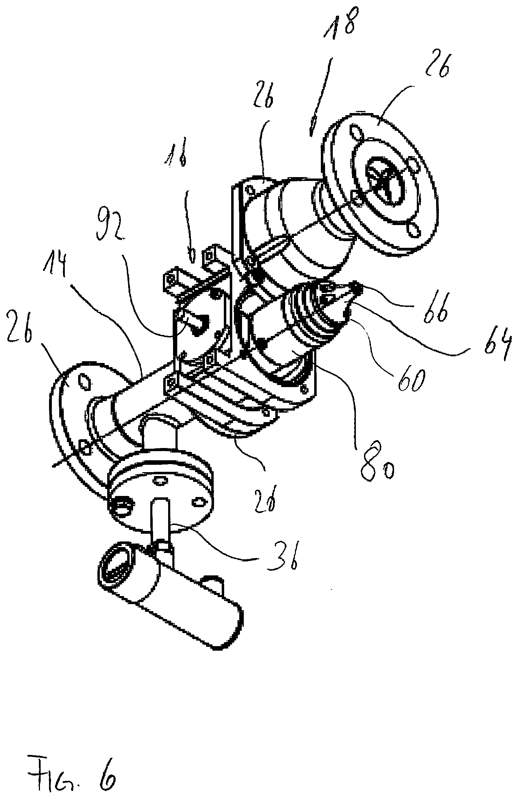

In Figur 6 ist das Regelventil 10 in perspektivische Darstellung nochmals gezeigt, wobei der Ausströmabschnitt 18 vom Antriebsabschnitt 16 gelöst ist und insbesondere das Rundschieberelement 60 freigibt. Deutlich zu erkennen ist die spezielle Form der Mantelfläche 64 des Rundschieberelements 60 mit der nicht-geradlinigen Mantellinie. Darüber hinaus ist das buchsenförmiges Element 80 gezeigt, dass mit dem Rundschieberelement verbunden ist. Im Übrigen sind gleiche Teile wie in den vorherigen Figuren mit den gleichen Bezugszeichen gekennzeichnet.

Die Funktionsweise des Regelventils 10 ist nun wie folgt:

Das Regelventil 10 kann in ein bestehendes Rohrleitungssystem eingebaut werden, wobei auf die Strömungsrichtung geachtet werden muss, da das Regelventil 10 nur in einer Richtung vorteilhaft genutzt werden kann. Das Regelventil 10 ist speziell für Nennweite von DN 50 bis DN 200 ausgelegt. Für größere Nennweite lassen sich andere Ventile, insbesondere das in der Beschreibungseinleitung erwähnte Regulierschieber-Ventil besser einsetzen.

Das durch die Einströmöffnung 20 einströmende Gas durchläuft den Strömungskanal 28 und wird am Ende des Einströmabschnitts 14 von dem Strömungselement 54 in den äußeren Ringbereich des Strömungskanals 42 geführt. Durch die spezielle Form des Strömungselement 54 wird besonders in der Mitte (in radialer Richtung gesehen) des Strömungskanals 28, dort wo das Durchflussmessinstrument vorgesehen ist, ein reproduzierbares Strömungsprofil realisiert.

Das vom Strömungselement 52 abgelenkte Gas strömt entlang der Innenfläche des Strömungskanals 42, d. h. zwischen Gehäuse 40 und Gehäuse 52 durch die beiden kreisringsegmentförmigen Öffnungen 54 in den Strömungskanal 100 des Ausströmabschnitts 18. Dieser Bereich des Strömungskanals 100 ist kreisringförmig bis zur Ausströmöffnung 22, wobei die Querschnittsfläche des Strömungskanals sich ausgehend vom Dichtungsring 69 bis zur Spitze des Rundschieberelements 60 stetig, vorzugsweise nicht-linear vergrößert. Der in diesem Bereich auftretende Venturi-Effekt trägt maßgeblich zu den geringen Energieverlusten des Regelventils 10 bei.

Soll die Durchflussmenge des Gases reduziert werden, wird das Rundschieberelement 60 über die Antriebseinrichtung 12 in Strömungsrichtung verlagert, sodass sich bedingt durch die Regelkontur 102 die durchströmte Querschnittsfläche vorzugsweise linear mit dem Verstellweg reduziert. Über das Durchflussmessinstrument 36 kann die Durchflussmenge stabil erfasst werden, um so von einer nicht gezeigten Steuereinrichtung die gewünschte Durchflussmenge einstellen und halten zu können.

Wichtig an dieser Stelle ist zu erwähnen, dass bei ordnungsgemäßem Einbau des Regelventils 10 das Rundschieberelement 60 nicht gegen den Druck des einströmenden Gases beim Schließen arbeiten muss. Vielmehr wird das Regelventil 10 durch eine Verlagerung des Rundschieberelements 60 in Strömungsrichtung geschlossen. Diese Ausgestaltung erlaubt kleinere Drehmomente, sodass die Komponenten der Getriebeeinrichtung 50 kleiner ausgelegt werden können.

Um das Strömungsverhalten im Bereich des Rundschieberelements 60 weiter zu optimieren, ist die Führung durch den Stift 72 vorgesehen. Diese Führung vermeidet beispielsweise ein Verkippen des Rundschieberelements 60 gegenüber der Längsachse, was zu Asymmetrien im Strömungskanal führen würde.

Insgesamt ermöglicht das erfindungsgemäße Regelventil 10 eine besonders präzise reproduzierbare Regelung der Durchflussmenge eines Gases speziell für Rohrleitungssysteme der Nennweite DN 50 bis DN 200.

Ein vorteilhafter möglicher Einsatzbereich dieses erfindungsgemäßen Regelventils 10 ist in sogenannten Flotationsanlagen zu sehen. Solche Flotationsanlagen nutzen das Einbringen von Luft in große Flüssigkeitstanks zum Trennen von Feststoffen, beispielsweise Erzen. Das erfindungsgemäße Regelventil 10 kann nun sehr einfach in bestehende Rohrleitungssysteme solcher Flotationsanlagen eingesetzt werden. Der Energieverbrauch für das Einbringen der Luft lässt sich so gegenüber bisherigen Systemen deutlich reduzieren. Darüber hinaus lässt sich die zugeführte Luftmenge in die Tanks der Anlage sehr präzise regeln, selbst wenn sich die Druckverhältnisse in den Tanks dynamisch verändern. Diese Konstanz in der zugeführten Luftmenge ist im Hinblick auf die Prozesse in den Tanks von großer Bedeutung.

## Patentansprüche

1. Regelventil zur Regelung eines Gasdurchflusses mit
einem länglichen, einen Strömungskanal (28, 42, 100) begrenzenden Gehäuse (24, 52, 98), das sich in einen Einströmabschnitt (14), einen Antriebsabschnitt (16), und einen Ausströmabschnitt (18) gliedert, die entlang einer Längsachse (L) aneinander angeordnet sind, wobei das Gas -bei bestimmungsgemäßem Gebrauch des Regelventils- den Strömungskanal vom Einströmabschnitt (14) über den Antriebsabschnitt (16) zum Ausströmabschnitt (18) durchströmt,
einer innerhalb des Antriebsabschnitts (16) vorgesehenen Getriebeeinrichtung (50), die eine von außen antreibbare parallel zur Längsachse liegende Abtriebswelle (84) und ein Rundschieberelement (60) aufweist, das entlang der Längsachse über die Abtriebswelle verschiebbar angeordnet ist und eine äußere Ventilsitzfläche (69) aufweist, die einen zwischen sich und einer Innenfläche (102) des Ausströmabschnitts (18) definierten Ringspalt durch eine Längsverschiebung in Strömungsrichtung schließt, und
einem Strömungselement (54), das an der Getriebeeinrichtung (50) an deren dem Einströmabschnitt zugewandten Ende vorgesehen ist und eine kalottenförmige Außenfläche aufweist, die das vom Einströmabschnitt kommende Gas in einen Ringspalt zwischen Getriebeeinrichtung (50) und Innenfläche des Antriebsabschnitts lenkt; **dadurch gekennzeichnet, dass**
der Einströmabschnitt einen zylindrischen Strömungskanal (28) aufweist, der im Wesentlichen über die gesamte Längserstreckung einen konstanten Durchmesser (D1) aufweist und sich beim Übergang zum Antriebsabschnitt konisch aufweitet und im Einströmabschnitt zumindest eine Öffnung für das Einführen von zumindest einem Messelement (36), vorzugsweise einem Durchflussmesselement, vorgesehen ist; und
das Rundschieberelement (60) kegelförmig ausgebildet ist mit einer kreisförmigen Grundfläche und einer Mantelfläche (64), die zwischen der Ventilsitzfläche (69) und der Spitze des Rundschieberelements vorgesehen ist, wobei an der Spitze (66) des Rundschieberelements ein parallel zur Längsachse verlaufendes Sackloch (70) vorgesehen ist.

2. Regelventil nach Anspruch 1, **dadurch gekennzeichnet, dass** die Getriebeeinrichtung eine Antriebswelle (92) aufweist, die sich senkrecht zur Abtriebswelle erstreckt und mit dieser über ein Getriebe verbunden ist, wobei ein Ende der Abtriebswelle außerhalb des Gehäuses liegt und mit einer Antriebseinrichtung koppelbar ist.

3. Regelventil nach Anspruch 2, **dadurch gekennzeichnet, dass** das Getriebe als Umlenkgetriebe, bevorzugt als Kegelradgetriebe (90) ausgebildet ist.

4. Regelventil nach einem der vorhergehenden Ansprüche, **dadurch gekennzeichnet, dass** die Ventilsitzfläche (69) als Dichtungsringring ausgebildet ist.

5. Regelventil nach Anspruch 1 oder 4, **dadurch gekennzeichnet, dass** im Ausströmabschnitt konzentrisch zur Längsachse ein Ringelement (74) vorgesehen ist, das zumindest zwei sich radial erstreckende Speichen (75) aufweist, die einen sich parallel zur Längsachse erstreckenden Stift (72) halten, wobei der Stift in das Sackloch eingreift, um das Rundschieberelement abzustützen und zu führen.

6. Regelventil nach Anspruch 1 oder 4, **dadurch gekennzeichnet, dass** eine Mantellinie (68) der Mantelfläche (64) des Rundschieberelements eine nicht-gerade Kurve ist und die Innenfläche des Ausströmabschnitts eine Regelkontur (102) aufweist, und die Regelkontur und die Ventilsitzfläche (69) derart aufeinander abgestimmt sind, dass die Veränderung des durchströmten Querschnitts des Ringspalts zwischen der Innenfläche und der Ventilsitzfläche so zu einem Verstellweg des Ringschieberelements in Längsrichtung abgestimmt ist, dass eine im wesentlichen lineare Betriebskennlinie erreicht wird.

7. Regelventil nach Anspruch 6, **dadurch gekennzeichnet, dass** die Regelkontur zumindest einen Regelkontur-Endbereich aufweist, der so ausgebildet ist, dass er im geschlossenen Zustand des Regelventils die Ventilsitzfläche (69) des Rundschieberelements in Strömungsrichtung zumindest teilweise abstützt und mit dieser dichtend zusammenwirkt, wobei vorzugsweise die Regelkontur (102) einen nicht-geradlinigen Verlauf aufweist.

8. Regelventil nach einem der vorhergehenden Ansprüche, **dadurch gekennzeichnet, dass** die Abtriebswelle als Spindel, vorzugsweise als Trapezgewindespindel, ausgebildet ist und mit einer Spindelmutter (82) zusammenwirkt, wobei die Spindelmutter (82) mit dem Rundschieberelement (60) gekoppelt ist; oder dass die Getriebeeinrichtung eine Getriebeverkleidung (52) aufweist, die eine strömungsoptimierte Außenfläche aufweist, wobei die Getriebeverkleidung sowohl die Antriebswelle als auch die Abtriebswelle umgibt.

9. Regelventil nach Anspruch 1, **dadurch gekennzeichnet, dass** der Antriebsabschnitt einen Strömungskanal (42) aufweist, dessen Durchmesser sich in Strömungsrichtung gesehen zunächst konisch aufweitet und anschließend im Wesentlichen konstant bleibt, wobei vorzugsweise der Strömungskanal im Antriebsabschnitt zumindest abschnittsweise zwei voneinander getrennte kreisringsegmentförmige Kanäle (94) aufweist.

10. Regelventil nach Anspruch 1, **dadurch gekennzeichnet, dass** der Ausströmabschnitt (18) in einem stromaufwärtigen Bereich einen kreisringförmigen Strömungskanal (100) aufweist, dessen Durchmesser in Strömungsrichtung zunächst dem Durchmesser des angrenzenden Antriebsabschnitts entspricht und sich anschließend konisch verjüngt auf einen Durchmesser, der im wesentlichen dem Durchmesser des Einströmabschnitts entspricht, wobei der kreisringförmige Strömungskanal in einen kreisförmigen Strömungskanal übergeht.

11. Regelventil nach Anspruch 6 und 10, wobei die Regelkontur (102) im sich konisch verjüngenden Bereich des Ausströmabschnitts liegt.

12. Regelventil nach Anspruch 1, **dadurch gekennzeichnet, dass** im Einströmabschnitt am stromaufwärtigen Ende ein Strömungsgleichrichterelement (38), vorzugsweise eine Lochscheibe (39), vorgesehen ist.

13. Regelventil nach einem der vorhergehenden Ansprüche, **dadurch gekennzeichnet, dass** es so dimensioniert ist, dass es in eine Rohrleitung mit einer Nennweite zwischen DN 50 bis DN 200 einsetzbar ist.

14. Flotationsanlage zum Trennen von Feststoffen, insbesondere Erzen, mit mehreren Tanks und zumindest einer Leitung zur Zufuhr von Gas in jeden Tank, wobei zur Regelung des Gasflusses in jeden Tank ein Regelventil nach einem der Ansprüche 1 bis 13 in der Leitung zu jeweils einem Tank vorgesehen ist.

15. Verwendung eines Regelventils nach einem der Ansprüche 1 bis 13 in einer Flotationsanlage zur Regelung des Gaszuflusses in einen Tank der Flotationsanlage.

## Claims

1. Control valve for controlling a gas through-flow, comprising
an elongate housing (24, 52, 98), which delimits a flow channel (28, 42, 100) and is divided into an inflow portion (14), a drive portion (16), and an outflow portion (18), which are arranged adjacent to one another along a longitudinal axis (L), wherein the gas flows through the flow channel from the inflow portion (14) via the drive portion (16) to the outflow portion (18) when the control valve is used as intended,
a gearing mechanism (50), which is provided within the drive portion (16) and has an externally drivable output shaft (84) parallel to the longitudinal axis and a rotary slide element (60), which is arranged displaceably along the longitudinal axis via the output shaft and has an outer valve seat surface (69), which closes an annular gap, defined between itself and an inner surface (102) of the outflow portion (18), by a longitudinal displacement in the flow direction, and
a flow element (54), which is provided on the gearing mechanism (50) at its end facing the inflow portion and has a dome-shaped outer surface, which directs the gas coming from the inflow portion into an annular gap between the gearing mechanism (50) and the inner surface of the drive portion;
**characterized in that**
the inflow portion has a cylindrical flow channel (28), which has a constant diameter (D1) substantially over the entire longitudinal extent and widens conically at the transition to the drive portion, and **in that** at least one opening for inserting at least one measuring element (36), preferably a flow measuring element, is provided in the inflow portion; and
the rotary slide element (60) is conical with a circular base surface and a lateral surface (64), which is provided between the valve seat surface (69) and the tip of the rotary slide element, wherein a blind hole (70) parallel to the longitudinal axis is provided at the tip (66) of the rotary slide element.

2. Control valve according to claim 1, **characterized in that** the gearing mechanism has a drive shaft (92), which extends perpendicularly to the output shaft and is connected thereto via a gear, wherein one end of the output shaft is located outside the housing and can be coupled to a drive mechanism.

3. Control valve according to claim 2, **characterized in that** the gear is designed as an idler gear, preferably as a bevel gear (90).

4. Control valve according to one of the preceding claims,
**characterized in that** the valve seat surface (69) is designed as a sealing ring.

5. Control valve according to claim 1 or 4, **characterized in that** a ring element (74) is provided in the outflow portion concentrically with the longitudinal axis and has at least two radially extending spokes (75), which hold a pin (72) extending in parallel with the longitudinal axis, wherein the pin engages in the blind hole in order to support and guide the rotary slide element.

6. Control valve according to claim 1 or 4, **characterized in that** a surface line (68) of the lateral surface (64) of the rotary slide element is a non-straight curve and the inner surface of the outflow portion has a control contour (102), and the control contour and the valve seat surface (69) are matched to each other in such a way that the change in the flowed-through cross-section of the annular gap between the inner surface and the valve seat surface is matched to an adjustment path of the annular slide element in the longitudinal direction such that a substantially linear operating characteristic curve is achieved.

7. Control valve according to claim 6, **characterized in that** the control contour has at least one control contour end area, which is designed such that, in the closed state of the control valve, it at least partially supports the valve seat surface (69) of the rotary slide element in the flow direction and cooperates with it in a sealing manner, wherein the control contour (102) preferably has a non-rectilinear course.

8. Control valve according to one of the preceding claims,
**characterized in that** the output shaft is designed as a spindle, preferably as a trapezoidal thread spindle, and cooperates with a spindle nut (82), wherein the spindle nut (82) is coupled to the rotary slide element (60), **or in that** the gearing mechanism has a gear cover (52), which has a flow-optimized outer surface, wherein the gear cover surrounds both the drive shaft and the output shaft.

9. Control valve according to claim 1, **characterized in that** the drive portion has a flow channel (42), of which the diameter initially widens conically, when viewed in the flow direction, and then remains substantially constant, wherein the flow channel in the drive portion preferably has, at least in portions, two separate circular-ring-segment-shaped channels (94).

10. Control valve according to claim 1, **characterized in that** the outflow portion (18) has, in an upstream area, a toroidal flow channel (100), of which the diameter in the flow direction initially corresponds to the diameter of the adjacent drive portion and then tapers conically to a diameter that substantially corresponds to the diameter of the inflow portion, wherein the toroidal flow channel transitions into a circular flow channel.

11. Control valve according to claims 6 and 10, wherein the control contour (102) is located in the conically tapered area of the outflow portion.

12. Control valve according to claim 1, **characterized in that** a flow straightener element (38), preferably a perforated disk (39), is provided in the inflow portion at the upstream end.

13. Control valve according to one of the preceding claims,
**characterized in that** it is dimensioned such that it can be used in a pipeline with a nominal diameter between DN 50 and DN 200.

14. Flotation plant for separating solids, in particular ores, with multiple tanks and at least one line for supplying gas to each tank, wherein a control valve according to one of claims 1 to 13 is provided in the line to each tank to control the gas flow into each tank.

15. Use of a control valve according to one of claims 1 to 13 in a flotation plant for controlling the gas inflow into a tank of the flotation plant.

## Revendications

1. Vanne de régulation pour la régulation d'un débit de gaz comportant
un boîtier (24, 52, 98) allongé, délimitant un canal d'écoulement (28, 42, 100) et se divisant en une section d'entrée (14), une section d'entraînement (16) et une section de sortie (18), lesquelles sont disposées les unes à côté des autres le long d'un axe longitudinal (L), dans laquelle le gaz, lors de l'utilisation conforme de la vanne de régulation, s'écoule à travers le canal d'écoulement de la section d'entrée (14) à la section de sortie (18) en passant par la section d'entraînement (16),
un dispositif à transmission (50) prévu à l'intérieur de la section d'entraînement (16) et qui présente un arbre de sortie (84) pouvant être entraîné depuis l'extérieur et situé parallèlement à l'axe longitudinal et un élément formant boisseau cylindrique (60) qui est disposé de manière à pouvoir coulisser le long de l'axe longitudinal par l'intermédiaire de l'arbre de sortie et qui présente une surface de siège de vanne (69) extérieure qui ferme une fente annulaire définie entre elle et une surface intérieure (102) de la section de sortie (18) par un coulissement longitudinal dans la direction d'écoulement, et
un élément d'écoulement (54) qui est prévu sur le dispositif à transmission (50) au niveau de son extrémité tournée vers la section d'entrée et qui présente une surface extérieure en forme de calotte qui dirige le gaz provenant de la section d'entrée dans une fente annulaire entre le dispositif à transmission (50) et la surface intérieure de la section d'entraînement ;
**caractérisée en ce que**
la section d'entrée présente un canal d'écoulement (28) cylindrique qui présente un diamètre constant (D1) sensiblement sur toute l'étendue longitudinale et qui s'élargit de manière conique lors de la transition vers la section d'entraînement, et au moins une ouverture est prévue dans la section d'entrée pour l'introduction d'au moins un élément de mesure (36), de préférence d'un élément de mesure de débit ; et
l'élément formant boisseau cylindrique (60) est réalisé en forme de cône avec une surface de base circulaire et une surface d'enveloppe (64) qui est prévue entre la surface de siège de vanne (69) et la pointe de l'élément formant boisseau cylindrique, dans laquelle un trou borgne (70) s'étendant parallèlement à l'axe longitudinal est prévu au niveau de la pointe (66) de l'élément formant boisseau cylindrique.

2. Vanne de régulation selon la revendication 1, **caractérisée en ce que** le dispositif à transmission présente un arbre d'entraînement (92) qui s'étend perpendiculairement à l'arbre de sortie et qui est relié à celui-ci par l'intermédiaire d'une transmission, dans laquelle une extrémité de l'arbre de sortie est située à l'extérieur du boîtier et peut être accouplée à un dispositif d'entraînement.

3. Vanne de régulation selon la revendication 2, **caractérisée en ce que** la transmission est réalisée comme une transmission de renvoi, de préférence comme une transmission à roues coniques (90).

4. Vanne de régulation selon l'une des revendications précédentes, **caractérisée en ce que** la surface de siège de vanne (69) est réalisée sous forme de bague d'étanchéité.

5. Vanne de régulation selon la revendication 1 ou 4, **caractérisée en ce qu'**un élément annulaire (74) est prévu dans la section de sortie de manière concentrique par rapport à l'axe longitudinal, lequel élément annulaire présente au moins deux rayons (75) s'étendant radialement, lesquels maintiennent une tige (72) s'étendant parallèlement à l'axe longitudinal, dans laquelle la tige vient en prise dans le trou borgne pour soutenir et guider l'élément formant boisseau cylindrique.

6. Vanne de régulation selon la revendication 1 ou 4, **caractérisée en ce qu'**une génératrice (68) de la surface d'enveloppe (64) de l'élément formant boisseau cylindrique est une courbe non droite et la surface intérieure de la section de sortie présente un contour de régulation (102), et le contour de régulation et la surface de siège de vanne (69) sont adaptés l'un à l'autre de telle sorte que la modification de la section transversale traversée par l'écoulement de la fente annulaire entre la surface intérieure et la surface de siège de vanne est adaptée à une course de réglage de l'élément formant boisseau cylindrique dans la direction longitudinale de telle sorte qu'une courbe caractéristique de fonctionnement sensiblement linéaire est obtenue.

7. Vanne de régulation selon la revendication 6, **caractérisée en ce que** le contour de régulation présente au moins une zone d'extrémité de contour de régulation qui est réalisée de sorte que, à l'état fermé de la vanne de régulation, ladite zone soutient au moins partiellement la surface de siège de vanne (69) de l'élément formant boisseau cylindrique dans la direction d'écoulement et coopère de manière étanche avec celle-ci, dans laquelle le contour de régulation (102) présente de préférence un tracé non rectiligne.

8. Vanne de régulation selon l'une des revendications précédentes, **caractérisée en ce que** l'arbre de sortie est réalisé sous forme de broche, de préférence sous forme de broche à filetage trapézoïdal, et coopère avec un écrou de broche (82), dans laquelle l'écrou de broche (82) est accouplé à l'élément formant boisseau cylindrique (60) ; **ou en ce que** le dispositif à transmission présente un carter de transmission (52) qui présente une surface extérieure optimisée pour l'écoulement, dans laquelle le carter de transmission entoure à la fois l'arbre d'entraînement et l'arbre de sortie.

9. Vanne de régulation selon la revendication 1, **caractérisée en ce que** la section d'entraînement présente un canal d'écoulement (42) dont le diamètre, vu dans la direction d'écoulement, s'élargit d'abord de manière conique et reste ensuite sensiblement constant, dans laquelle, de préférence, le canal d'écoulement dans la section d'entraînement présente, au moins dans certaines sections, deux canaux (94) en forme de segments d'anneau circulaire séparés l'un de l'autre.

10. Vanne de régulation selon la revendication 1, **caractérisée en ce que** la section de sortie (18) présente, dans une zone en amont, un canal d'écoulement (100) en forme d'anneau circulaire, dont le diamètre dans la direction d'écoulement correspond d'abord au diamètre de la section d'entraînement adjacente et se rétrécit ensuite de manière conique jusqu'à un diamètre qui correspond sensiblement au diamètre de la section d'entrée, dans laquelle le canal d'écoulement en forme d'anneau circulaire se transforme en un canal d'écoulement circulaire.

11. Vanne de régulation selon les revendications 6 et 10, dans laquelle le contour de régulation (102) se trouve dans la zone se rétrécissant de manière conique de la section de sortie.

12. Vanne de régulation selon la revendication 1, **caractérisée en ce qu'**un élément redresseur de flux (38), de préférence un disque perforé (39), est prévu dans la section d'entrée au niveau de l'extrémité amont.

13. Vanne de régulation selon l'une des revendications précédentes, **caractérisée en ce qu'**elle est dimensionnée de sorte qu'elle peut être insérée dans une canalisation comportant un diamètre nominal compris entre DN 50 à DN 200.

14. Installation de flottation pour la séparation de matières solides, en particulier de minerais, comportant plusieurs réservoirs et au moins une canalisation pour l'amenée de gaz dans chaque réservoir, dans laquelle, pour la régulation du flux de gaz dans chaque réservoir, une vanne de régulation selon l'une des revendications 1 à 13 est prévue dans la canalisation vers respectivement un réservoir.

15. Utilisation d'une vanne de régulation selon l'une des revendications 1 à 13 dans une installation de flottation pour la régulation de l'arrivée de gaz dans un réservoir de l'installation de flottation.
